# EUROPEAN PATENT APPLICATION

(11) **EP 2 950 370 A1**
(43) Date of publication of application: **02.12.2015**
(21) Application number: 15169875.0
(22) Date of filing: 29.05.2015
(51) Int. Cl.: H01M 2/16, H01M 4/62, H01M 10/0525, H01M 10/0585, H01M 10/42

(54) **LITHIUM SECONDARY BATTERY**

(30) Priority: 30.05.2014 KR 20140065570
(71) Applicant: SK Innovation Co., Ltd., Seoul 110-728 (KR)
(72) Inventor: Hwang, Duck Chul, 305-712 Daejeon (KR); Kim, Sang Jin, 305-712 Daejeon (KR); Yoo, Kyung Bin, 305-712 Daejeon (KR); Lim, Jin Sub, 305-712 Daejeon (KR); Cho, Yong Hyun, 305-712 Daejeon (KR); Han, Kook Hyun, 305-712 Daejeon (KR)
(74) Representative: Stolmár & Partner Patentanwälte PartG mbB

(57) **Abstract**

Provided is a lithium secondary battery in which a separator is not provided. The lithium secondary battery includes: a cathode in which a cathode active material layer is formed on a cathode current collector; an anode in which an anode active material layer is formed on an anode current collector; and an inorganic layer positioned between the cathode and the anode facing each other and containing inorganic particles and a binder, wherein the inorganic layer is in a state in which the inorganic layer is bound to both of the cathode active material layer and the anode active material layer.

## Description

### TECHNICAL FIELD

The following disclosure relates to a lithium secondary battery, and more particularly, to a high safety lithium secondary battery of which safety is excellent and a lifespan is significantly improved.

### BACKGROUND

In accordance with development of mobile electric products such as an electric vehicle, a mobile phone, or the like, high capacity, high power, and long lifespan characteristics of a battery have been continuously demanded. In a lithium secondary battery, an atomic weight of a lithium element itself is small, such that lithium is suitable for manufacturing a battery having large electric capacity per unit mass, and in the case of using a non-aqueous electrolyte, since the lithium secondary battery is not affected by an electrolysis voltage of water, the lithium secondary battery may generate electromotive force of about 3 to 4 V.

The lithium secondary battery is a battery manufactured using a cathode, an anode, a separator positioned between the cathode and the anode, and an electrolyte or a gel type polymer, and electric energy stored in the cathode and the anode is separated by the separator to thereby be safely maintained, but in the case in which a short-circuit is generated between the cathode and the anode, the stored electric energy is emitted in a short time, thereby causing heat generation/ignition or a thermal runaway phenomenon.

The electric energy as described above is increased in proportion to energy density of the battery. Therefore, in accordance with the trend toward high energy of the battery, a technology for improving safety of the battery has been urgently demanded.

In order to improve safety of the lithium secondary battery, a technology of forming a fine unevenness in a separator as disclosed in Korean Patent Laid-Open Publication No. 2010-0084326, or technologies of coating a surfactant, or the like, on a separator, have been suggested. However, since the separator is based on a resin based microporous film, the separator has low puncture strength, such that there is limitation in improving safety.

### [Related Art Document]

### [Patent Document]

(Patent Document 1) Korean Patent Laid-Open Publication No. 2010-0084326

### SUMMARY

An embodiment of the present invention is directed to providing a lithium secondary battery in which a resin based microporous film is not provided.

Another embodiment of the present invention is directed to providing a lithium second battery having excellent safety and lifespan characteristics (cycle characteristics) further improved than those of a lithium secondary battery including a resin based microporous film according to the related art.

Another embodiment of the present invention is directed to providing a lithium secondary battery capable of having a high energy density and being thinned while having excellent safety and an improved lifespan.

In one general aspect, a lithium secondary battery includes: a cathode in which a cathode active material layer is formed on a cathode current collector; an anode in which an anode active material layer is formed on an anode current collector; and an inorganic layer positioned between the cathode and the anode facing each other and containing inorganic particles and a binder, wherein the inorganic layer is in a state in which the inorganic layer is bound to both of the cathode active material layer and the anode active material layer.

The inorganic layer may be a separator of the secondary battery.

The binder of the inorganic layer may be a fluorine based resin, and at least one of the cathode active material layer and the anode active material layer may contain a binding agent, which is a fluorine based resin.

The cathode active material layer may contain the binding agent, which is the fluorine based resin, the inorganic layer and the anode active material layer may be bound to each other by applying a coating solution containing the inorganic particles, the binder, and a solvent on the anode active material layer and volatilizing and removing the solvent to solidify the binder, and the inorganic layer and the cathode active material layer may be bound to each other by pressing the anode on which the inorganic layer is formed and the cathode.

The anode active material layer may contain the binding agent, which is the fluorine based resin, the inorganic layer and the cathode active material layer may be bound to each other by applying a coating solution containing the inorganic particles, the binder, and a solvent on the cathode active material layer and volatilizing and removing the solvent to solidify the binder, and the inorganic layer and the anode active material layer may be bound to each other by pressing the cathode on which the inorganic layer is formed and the anode.

The inorganic layer may include a first inorganic layer bound onto the cathode active material layer by volatilizing and removing a solvent dissolving a first binder, which is a fluorine based resin, to solidify the first binder; and a second inorganic layer bound onto the anode active material layer by volatilizing and removing a solvent dissolving a second binder, which is a fluorine based resin, to solidify the second binder, wherein the first inorganic layer formed on the cathode and the second inorganic layer formed on the anode are in a state in which they are bound to each other by pressing.

The binding agent and the binder may be each independently polyvinylidene fluoride (PVDF), poly(vinylidene fluoride-hexafluoro propylene (PVdf-HFP), or a mixture thereof.

The inorganic particles may be made of Al₂O₃, TiO₂, ZrO₂, Y₂O₃, ZnO, CaO, NiO, MgO, SiO₂, SiC, Al(OH)₃, AIO(OH), BaTiO₃, PbTiO₃, PZT, PLZT, PMN-PT, HfO₂, SrTiO₃, SnO₃, CeO₂, or a mixture thereof.

The inorganic layer may have a thickness of 10 to 40 µm.

The inorganic particles may have an average diameter of 0.1 to 5 µm.

The inorganic layer may contain 90 to 60 wt% of the inorganic particles and 10 to 40 wt% of the binder.

### BRIEF DESCRIPTION OF THE DRAWINGS

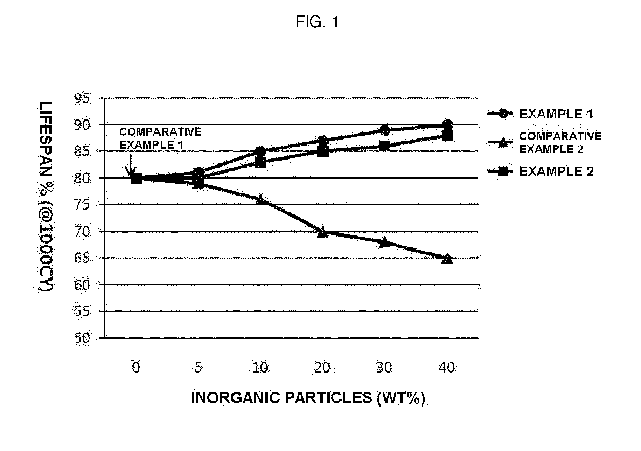

FIG. 1 is a view illustrating a result obtained by measuring lifespans of secondary batteries manufactured in Examples 1 and 2 and Comparative Examples 1 and 2.

### DETAILED DESCRIPTION OF EMBODIMENTS

Hereinafter, a lithium secondary battery according to the present invention will be described in detail with reference to the accompanying drawings. The following accompanying drawings are provided by way of example so that the idea of the present invention can be sufficiently transferred to those skilled in the art to which the present invention pertains. Therefore, the present invention is not limited to the drawings to be provided below, but may be modified in many different forms. In addition, the drawings to be provided below may be exaggerated in order to clarify the idea of the present invention. Like reference numerals denote like elements throughout the specification.

Here, technical terms and scientific terms used in the present specification have the general meaning understood by those skilled in the art to which the present invention pertains unless otherwise defined, and a description for the known function and configuration unnecessarily obscuring the gist of the present invention will be omitted in the following description and the accompanying drawings.

A lithium secondary battery according to an exemplary embodiment of the present invention includes a cathode in which a cathode active material layer is formed on a cathode current collector; an anode in which an anode active material layer is formed on an anode current collector; and an inorganic layer positioned between the cathode and the anode facing each other and containing inorganic particles and a binder, wherein the inorganic layer may be in a state in which the inorganic layer is bound to both of the cathode active material layer and the anode active material layer. That is, the lithium secondary battery according to an exemplary embodiment of the present invention includes the cathode, the anode, and the inorganic layer, but may have an electrode structure in which the cathode, the anode, and the inorganic layer are physically bound to each other to thereby be integrated instead of a simple multilayer structure in which the cathode, the anode, and the inorganic layer are sequentially stacked.

In the secondary battery according to an exemplary embodiment of the present invention as described above, the inorganic layer instead of a porous polymer film serves as a separator, such that safety of the secondary battery may be significantly improved, and at the same time, the secondary battery may have a lifespan significantly improved by the electrode structure of the cathode, the inorganic layer, and the anode that are physically bound to each other to thereby be integrated with each other instead of the simple multilayer structure.

In detail, the inorganic layer may contain the inorganic particles and a polymer binder, and this inorganic layer itself may be a separator of the secondary battery. That is, the lithium secondary battery according to an exemplary embodiment of the present invention may not be provided with a resin based separator, which is a porous polymer film generally used in a battery field.

In the case in which the inorganic layer itself is provided as the separator of the secondary battery, safety of the secondary battery may be significantly improved as compared to a polymer based separator such as a polyethylene separator and a polypropylene separator.

In the battery according to an exemplary embodiment of the present invention in which the inorganic layer itself serves as the separator, binding between the inorganic layer and electrodes (the cathode and the anode) may have a significant influence on the lifespan of the battery together in addition to improvement of safety by the inorganic layer. That is, in the case in which the inorganic layer is physically bound to two electrodes (the cathode and the anode) adjacent to each other, even though charge and discharge cycles are repeated, it is possible to prevent battery characteristics from being deteriorated.

In the lithium secondary battery according to an exemplary embodiment of the present invention, the binder of the inorganic layer may be a fluorine based resin, and at the same time, at least one of the cathode active material layer and the anode active material layer may contain a binding agent, which is a fluorine based resin.

In detail, a lithium secondary battery according to an exemplary embodiment of the present invention may include a cathode in which a cathode active material layer containing a cathode active material and a binding agent, which is a fluorine based resin, is formed on a cathode current collector; an anode in which an anode active material layer is formed on an anode current collector; and an inorganic layer containing inorganic particles and a binder, which is a fluorine based resin, wherein the inorganic layer is positioned between the cathode active material layer and the anode active material layer facing each other, such that the inorganic layer may be in the state in which the inorganic layer is bound to both of the cathode active material layer and the anode active material layer.

In the case in which the cathode active material layer contains the binding agent, which is the fluorine based resin, and the inorganic layer contains the binder, which is the fluorine based resin, the inorganic layer and the anode active material layer may be bound to each other by applying a coating solution containing the inorganic particles, the binder, and a solvent on the anode active material layer and volatilizing and removing the solvent to solidify the binder, and the inorganic layer and the cathode active material layer may be bound to each other by pressing the anode on which the inorganic layer is formed and the cathode.

In detail, a lithium secondary battery according to an exemplary embodiment of the present invention may include a cathode in which a cathode active material layer is formed on a cathode current collector; an anode in which an anode active material layer containing an anode active material and a binding agent, which is a fluorine based resin, is formed on an anode current collector; and an inorganic layer containing inorganic particles and a binder, which is a fluorine based resin, wherein the inorganic layer is positioned between the cathode active material layer and the anode active material layer facing each other, such that the inorganic layer may be in the state in which the inorganic layer is bound to both of the cathode active material layer and the anode active material layer.

In the case in which the anode active material layer contains the binding agent, which is the fluorine based resin, and the inorganic layer contains the binder, which is the fluorine based resin, the inorganic layer and the cathode active material layer may be bound to each other by applying a coating solution containing the inorganic particles, the binder, and a solvent on the cathode active material layer and volatilizing and removing the solvent to solidify the binder, and the inorganic layer and the anode active material layer may be bound to each other by pressing the cathode on which the inorganic layer is formed and the anode.

In more detail, the inorganic layer and the anode (or the cathode) may be bound to each other by phase conversion (phase conversion from a liquid phase to a solid phase) of the binder due to application and drying of the coating solution containing the inorganic particles, the binder, and the solvent. In detail, after the coating solution containing the inorganic particles, the binder, and the solvent dissolving the binder is applied onto the anode active material layer (or the cathode active material layer) formed on the anode current collector (or the cathode current collector), while the solvent is volatilized to thereby be removed, the coating solution is changed into a solid phase, thereby making it possible to bind the inorganic particles and the anode active material layer (or the cathode active material layer) to each other simultaneously with binding the inorganic particles to each other.

The anode (or the cathode) to which the inorganic layer is physically bound may be formed by applying and drying the above-mentioned coating solution, and the cathode active material layer (or the anode active material layer) contains the binding agent, which is the fluorine based resin, and at the same time, the inorganic layer contains the inorganic particles and the binder, which is the fluorine based resin, such that the inorganic layer may be bound to the cathode (or the anode) by simply pressing. More specifically, in the case in which the cathode active material layer (or the anode active material layer) contains the fluorine based resin as the binding agent, and the inorganic layer contains the fluorine based resin as the binder, the inorganic layer and the cathode active material layer (or the inorganic layer and the anode active material layer) are physically bound to each other by a process of applying a pressure to a multilayer body after stacking the anode and the cathode so that the inorganic layer of the anode (or the cathode) on which the inorganic layer is formed and the cathode active material layer (or the anode active material layer) come in contact with each other, and an electrode structure body in which the anode-the inorganic layer-the cathode are strongly and stably bound to each other may be formed. However, as the fluorine based resin has binding force by pressure, the solvent of the coating solution for an inorganic layer may be a solvent that does not dissolve the fluorine based resin. In this case, while the inorganic particles of the inorganic layer are bound to each other by the fluorine based resin, the electrode coming in contact with the inorganic layer may be bound to the inorganic layer through the process of applying a pressure to the multilayer body.

In detail, a lithium secondary battery according to an exemplary embodiment of the present invention may include a cathode in which a cathode active material layer is formed on a cathode current collector; an anode in which an anode active material layer containing an anode active material and a binding agent, which is a fluorine based resin, is formed on an anode current collector; a first inorganic layer formed on the cathode active material layer and containing first inorganic particles and a binder, which is a first fluorine based resin; and a second inorganic layer formed on the anode active material layer and containing second inorganic particles and a binder, which is a second fluorine based resin, wherein it has an electrode structure in which the cathode-the first inorganic layer-the second inorganic layer-the anode are bound to each other to thereby be integrated with each other.

In more detail, in the case in which the inorganic layer includes the first and second inorganic layers, the first inorganic layer may be in a state in which the first inorganic layer is bound onto the cathode active material layer by volatilizing and removing a solvent dissolving the first binder, which is the fluorine based resin, to solidify the first binder, and the second inorganic layer may be in a state in which the second inorganic layer is bound onto the anode active material layer by volatilizing and removing a solvent dissolving the second binder, which is the fluorine based resin, to solidify the second binder. The first inorganic layer and the second inorganic layer are bound to each other by pressing, such that the cathode on which the first inorganic layer is formed and the anode on which the second inorganic layer is formed may be integrally coupled to each other.

In the case in which the inorganic layer includes the first inorganic layer and the second inorganic layer, the cathode and the first inorganic layer may be coupled to each other and the anode and the second inorganic layer may be coupled to each other similarly as described above. That is, as the binder is changed into a solid phase while a solvent of a coating solution for an inorganic layer is volatilized to thereby be removed, the first inorganic layer and the cathode may be bound to each other, and the second inorganic layer and the anode may be bound to each other. Therefore, as the binding agent of the cathode active material layer and the binding agent of the anode active material layer, any binding agent may be used as long as it is a general binding agent used in the art at the time of preparing an active material layer. A specific and non-restrictive example of the binding agent of the cathode active material layer or the anode active material layer may include a polyvinylidene fluoride-hexafluoropropylene copolymer, a polyvinylidene fluoride-trichloroethylene copolymer, polymethylmethacrylate, polyacrylonitrile, polyvinyl pyrrolidone, polyvinyl acetate, a polyethylene-vinyl acetate copolymer, polyethyleneoxide, cellulose acetate, cellulose acetate butyrate, cellulose acetate propionate, cyanoethylflurane, cyanoethylpolyvinyl alcohol, cyanoethyl cellulose, cyanoethyl sucrose, flurane, carboxymethyl cellulose, a styrene-butadiene copolymer, an acrylonitrile-styrene-butadiene copolymer, polyimide, polytetrafluoroethylene, or a mixture thereof. In addition, similarly as described above, as the fluorine based resin has binding force by pressure, the solvent of the coating solution for the inorganic layer may be a solvent that does not dissolve the fluorine based resin. In this case, while the inorganic particles of the first inorganic layer are bound to each other by the fluorine based resin and the inorganic particles of the second inorganic layer are bound to each other, the electrodes coming in contact with the inorganic layers may be bound to the inorganic layers by the fluorine based resin, through the process of applying a pressure to a multilayer body.

The physical binding between the inorganic layer and the anode and between the inorganic layer and the cathode as described above may have a significant influence on charge and discharge cycle characteristics of the battery. Due to the inorganic layer, the battery may have more excellent charge and discharge cycle characteristics as compared to a battery including separator formed of a polymer based microporous film according to the related art, while having safety such that that the battery does not ignite even if the battery is punctured.

It is preferable that the binding agent, which is the fluorine based resin, or the binder, which is the fluorine based resin, is polyvinylidene fluoride (PVDF), poly(vinylidene fluoride-hexafluoro propylene (PVdf-HFP), or a mixture thereof. In this case, a weight average molecular weight (Mw) of the fluorine based resin may be 200,000 to 1,500,000.

In the case in which the binding agent, which is the fluorine based resin, and the binder, which is the fluorine based resin, are each independently polyvinylidene fluoride (PVDF), poly(vinylidene fluoride-hexafluoro propylene (PVdf-HFP), or a mixture thereof, or in the case in which the first binder of the first inorganic layer and the second binder of the second inorganic layer are each independently polyvinylidene fluoride (PVDF), poly(vinylidene fluoride-hexafluoro propylene (PVdf-HFP), or a mixture thereof, since the electrode structure of the cathode-the inorganic layer-the anode physically and strongly bound to each other may be formed by the pressing without damage to a porous structure of the inorganic layer, at the time of repeating charge and discharge cycles 1000 times, the battery may have battery capacity that is improved by 5% or more as compared to a lithium secondary battery including a resin based separator such as a polyethylene based microporous film.

In the secondary battery according to an exemplary embodiment of the present invention, the inorganic layer may contain 90 to 60 wt% of the inorganic particles and 10 to 40 wt% of the binder. Here, in the case in which the inorganic layer includes the first inorganic layer and the second inorganic layer, the first inorganic layer and the second inorganic layer may each independently contain 90 to 60 wt% of inorganic particles (first inorganic particles or second inorganic particles and 10 to 40 wt% of the binder (the first binder or the second binder).

Contents of the inorganic particles and the binder contained in the inorganic layer may have a significant influence on safety of the battery, and in the case in which the content of the inorganic particles contained in the inorganic layer is less than 60 wt%, it may be impossible to secure safety of the battery due to the inorganic layer. More specifically, in the case in which the content of the inorganic particles contained in the inorganic layer is less than 60 wt%, at the time of testing safety by puncturing the battery at 80mm/sec using a pin (3mm) in a state in which the battery is charged, ignition may be generated.

Further, in the case in which the content of the inorganic particles contained in the inorganic layer is more than 90 wt%, the inorganic layer may be damaged by an external factor such as impact, and binding force between the inorganic particles in the inorganic layer and between the inorganic layer and the electrode may be decreased, such that a process defect such as separation of the coating layer or the inorganic particles, or the like, may occur during a process of manufacturing the battery.

The inorganic particles (including the first inorganic particles or the second inorganic particles) contained in the inorganic layer may be made of TiO₂, ZrO₂, Y₂O₃, ZnO, CaO, NiO, MgO, SiO₂, SiC, Al(OH)₃, AIO(OH), BaTiO₃, PbTiO₃, PZT (Pb[ZrₓTi₁₋ₓ]O₃, x is a real number satisfying 0<x<1), PLZT (Pb₁₋ₓLaₓZr_{1-y}Ti_{y}O₃, x is a real number satisfying 0<x<1, and y is a real number satisfying 0<y<1), PMN-PT (xPb(Mg_{1/3}Nb_{2/3})O₃-(1-x)PbTiO₃ solid solution, x is a real number satisfying 0<x<1), HfO₂, SrTiO₃, SnO₃, CeO₂, or a mixture thereof. Preferably, the inorganic particles may be made of one or at least two selected from Al₂O₃, TiO₂, ZrO₂, Y₂O₃, ZnO, CaO, NiO, MgO, and SiO₂, and these inorganic particles are chemically stable with respect to battery components such as an electrolyte, have a good wetting property with respect to the electrolyte and high permittivity, and are porous particles, such that the inorganic particles are more advantageous. An average diameter of the inorganic particles contained in the inorganic particles may be 0.1 to 5 µm, such that the electrolyte may be stably loaded and movement of lithium ions may be secured through empty air gaps between the inorganic particles.

A thickness of the inorganic layer may be 10 to 40 µm, more specifically, 10 to 25 µm. The thicker the thickness of the inorganic layer, the higher the resistance of the battery, and the thickness of 10 to 40 µm, more specifically, 10 to 25 µm is a thickness similar to or thinner than that of a polymer resin based microporous film that is generally used as the separator according to the related art. High density energy may be filled in the battery, and thinness may be implemented due to the thin thickness as described above.

As described above, the lithium secondary battery according to an exemplary embodiment of the present invention has the electrode structure in which the inorganic layer containing the inorganic particles and the binder and replacing the separator is positioned between the cathode and the anode, and the cathode-the inorganic layer-the anode are bound to each other to thereby be physically integrated with each other, and in the case in which the binding is performed by pressing the fluorine based resin, which is the binding agent and/or the binder, preferably polyvinylidene fluoride (PVDF), poly(vinylidene fluoride-hexafluoro propylene (PVdf-HFP), or the mixture thereof in the electrode structure in which the cathode-the inorganic layer-the anode are integrated with each other, the battery may have significantly excellent charge and discharge cycle characteristics as compared to the lithium secondary battery including a polymer resin microporous film according to the related art, while having safety such that that the battery does not ignite even if the battery is punctured.

As described above, the secondary battery according to an exemplary embodiment of the present invention may include the cathode, the anode, and the inorganic layer positioned between the cathode and the anode facing each other and bound to both of the cathode and the anode. In this case, the cathode may include the cathode current collector and the cathode active material layer, and the anode may include the anode current collector and the anode active material layer.

The cathode active material layer may contain the cathode active material and the binding agent, and further contain a thickening agent for facilitating a process of manufacturing the battery or a conductive material for improving conductivity. In this case, as described above, in the case in which the inorganic layer is formed on the anode active material layer by application of the coating solution and the cathode and the anode on which the inorganic layer is formed are pressed, the binding agent of the cathode active material layer may be preferably poly(vinylidene fluoride-hexafluoro propylene (PVdF-HFP), or a mixture thereof. Independently, in the case in which the inorganic layer includes the first inorganic layer and the second inorganic layer, the binding agent of the cathode active material layer may be a binding agent (binder) generally used in an active material layer of a secondary battery.

As the cathode active material contained in the cathode active material layer, any material may be used as long as it enables reversible separation and insertion of lithium ions, and is a cathode active material generally used in a lithium secondary battery. As a non-restrictive example, the cathode active material may be at least one selected from oxides having a layer structure exemplified by LiCoO₂, oxides having a spinel structure exemplified by LiMn₂O₄, a phosphate based material having an olivine structure exemplified by LiFePO₄, lithium (including lithium excess)-manganese-nickel-cobalt composite oxides exemplified by Li₁₊ₓ(MnₐNi_{b}Co_{c})O_{2+y} (x is a real number satisfying 0≤x≤0.5, a is a real number satisfying 0.5≤a≤0.75, b is a real number satisfying 0.2≤b≤0.25, c is a real number satisfying 0≤c≤0.3, and y is a real number satisfying 0≤y≤0.5), and lithium-nickel-cobalt composite oxides exemplified by Li(NiₐCo_{b}M_{c})O₂ (a is a real number satisfying 0.7≤a≤1, b is a real number satisfying 0≤b+c≤0.3, c is a real number satisfying 0≤c≤0.1, and M is a transition metal except for Ni and Co), and be a composite of at least two materials (first and second cathode active materials). This composite may have a structure in which first and second cathode active materials are simply mixed with each other, a core-shell structure composed of a core of a first cathode active material and a shell of a second cathode active material, a structure in which a second cathode active material is loaded(or embedded) in a matrix of a first cathode active material, a structure in which a second cathode active material is coated on or loaded in a first cathode active material having a zero-dimensional, one-dimensional, or two-dimensional nano structure, or a multilayer structure in which first and second cathode active materials are stacked while forming layers, respectively. However, the present invention is not limited by the cathode active material. As the conductive material, any conductive material may be used as long as it is generally used in a lithium secondary battery in order to improve electric conductivity of the cathode active material layer itself. As a specific example, there are carbon black, acetylene black, and the like, but the present invention is not limited thereto.

The anode active material layer may contain the anode active material and the binding agent, and further contain a thickening agent for facilitating a process of manufacturing the battery or a conductive material for improving conductivity of the anode active material layer. As the anode active material, any material may be used as long as it is generally used as an anode active material of a lithium secondary battery. As a specific example, the anode active material may be at least one selected from the group consisting of lithium (metal lithium), soft carbon(easily graphitizable carbon), hard carbon(hardly graphitizable carbon), graphite, silicon, a Sn alloy, a Si alloy, a Sn oxide, a Si oxide, a Ti oxide, a Ni oxide, a Fe oxide (FeO), and lithium-titanium oxides (LiTiO₂, Li₄Ti₅O_{d} and be a composite of at least two selected materials (first and second anode active materials). This composite may have a structure in which first and second anode active materials are simply mixed with each other, a core-shell structure composed of a core of a first anode active material and a shell of a second anode active material, a structure in which a second anode active material is loaded in a matrix of a first anode active material, a structure in which a second anode active material is coated on or loaded in a first anode active material having a zero-dimensional, one-dimensional, or two-dimensional nano structure, or a multilayer structure in which first and second anode active materials are stacked while forming layers, respectively.

In this case, as described above, in the case in which the inorganic layer is formed on the cathode active material layer by application of the coating solution and the anode and the cathode on which the inorganic layer is formed are pressed, the binding agent of the anode active material layer may be preferably poly(vinylidene fluoride-hexafluoro propylene (PVdF-HFP), or a mixture thereof. Independently, in the case in which the inorganic layer includes the first inorganic layer and the second inorganic layer, the binding agent of the anode active material layer may be a binding agent (binder) generally used in an active material layer of a secondary battery.

The cathode current collector or the anode current collector is each independently a cathode current collector or anode current collect used in a general lithium secondary battery. More specifically, the cathode current collector or the anode current collector may be foam, a film, a mesh, a felt, or a perforated film, which is made of a conductive material. More specifically, the cathode current collector or the anode current collector may be made of a conductive material that has excellent conductivity and is chemically stable at the time of charging and discharging the battery such as graphite, graphene, titanium, copper, platinum, aluminum, nickel, silver, gold, or carbon nanotube, be foam, a film, a mesh, a felt, or a perforated film, which is made of the conductive material as described above, and be a composite coated or stacked by different conductive materials. However, the present invention is not limited by a shape and a material of the current collector.

The cathode active material layer may be manufactured by applying and drying cathode active material slurry in which materials forming the cathode active material layer are dispersed and/or dissolved onto the cathode current collector and pressing the cathode active material slurry, and the anode active material layer may be manufactured by applying and drying anode active material slurry in which materials forming the anode active material layer are dispersed and/or dissolved onto the anode current collector and pressing the anode active material slurry. In this case, the cathode active material layer (or the anode active material layer) may be formed on one surface or both surfaces of the cathode current collector (or the anode current collector).

As described above, the inorganic layer may contain the inorganic particles and the fluorine based resin binder. The inorganic layer may be positioned between the cathode and the anode facing each other and be in a state in which the inorganic layer is bound to both of the cathode and the anode. In detail, the inorganic layer may be positioned between the cathode and the anode facing each other and be in a state in which the inorganic layer is bound to both of the cathode active material layer of the cathode and the anode active material layer of the anode. Therefore, the cathode-the inorganic layer-the anode of the secondary battery may be physically integrated with each other by the binding between the inorganic layer and the electrodes (the cathode and the anode).

In a physically integrated electrode structure body of a cathode-inorganic layer-anode, after manufacturing the anode (or the cathode) to which the inorganic layer is bound, that is, a physically integrated inorganic layer-anode composite (or a physically integrated inorganic layer-cathode composite) by applying a coating solution containing inorganic particles, the binder, which is the fluorine based resin, and a solvent dissolving at least the binder on the anode active material layer of the anode and volatilizing and removing the solvent by drying, an inorganic layer of the inorganic layer-anode composite (or the inorganic layer-cathode composite) and the cathode active material layer of the cathode (or the anode active material layer of the anode) are stacked so as to come in contact with each other. Thereafter, a pressure is applied to a multilayer body, thereby binding the cathode active material and the inorganic layer to each other.

Independently, in a physically integrated electrode structure body of a cathode-inorganic layer-anode, after manufacturing the anode to which the first inorganic layer is bound, that is, a physically integrated first inorganic layer-anode composite by applying a coating solution containing inorganic particles, the binder, which is the fluorine based resin, and a solvent dissolving at least the binder on the anode active material layer of the anode and volatilizing and removing the solvent by drying, and manufacturing a second inorganic layer-cathode composite using a similar method, the first inorganic layer-anode composite and the second inorganic layer-cathode composite are stacked so that the first inorganic layer and the second organic layer come in contact with each other. Thereafter, a pressure is applied to a multilayer body, thereby binding the first inorganic layer and the second inorganic layer to each other.

The pressure applied to the multilayer body may be 250 to 2500 kgf. The binding agent of the cathode active material layer and the binder of the inorganic layer, the binding agent of the anode active material layer and the binder of the inorganic layer, or the binder of the first inorganic layer and the binder of the second inorganic layer may be physically bound to each other without damage to the cathode active material layer, the anode active material layer, and the inorganic layer at this pressure, such that an electrode structure body of the cathode-the inorganic layer-the anode that are bound to each other with strong interfacial binding force may be manufactured.

The secondary battery according to an exemplary embodiment of the present invention may include a multilayer type electrode structure body in which at least two cathodes and at least two anodes are alternately stacked, but an inorganic layer is positioned between each of the cathodes and anodes facing each other. In the multilayer type electrode structure body, as described above, the cathode and the anode facing each other may be bound to each other by the inorganic layer, the multilayer type electrode structure body itself may be physically integrated. The number of cathodes and anodes forming the multilayer type electrode structure body may be appropriately changed depending on capacity designed in consideration of uses of the battery. As a specific and non-restrictive example, the multilayer type electrode structure may have a structure body in which 2 to 30 cathodes and anodes corresponding thereto, and inorganic layers are bound to each other. In this case, the electrodes (the cathode and/or the anode) forming the multilayer type electrode structure body may be connected in series or parallel with each other, and connection of the electrodes may be performed through a non-coated portion, which is a region of the current collector on which the active material is not formed.

The secondary battery according to an exemplary embodiment of the present invention may further include electrolyte, and as the electrolyte, an electrolyte containing an organic solvent and a lithium salt that are generally used in a lithium secondary battery may be used. As a specific and non-restrictive example, the lithium salt may be a salt of which an anion is at least any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻. As a specific and non-restrictive example, the organic solvent of the electrolyte may be at least any one selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, and tetrahydrofuran.

The secondary battery according to an exemplary embodiment of the present invention may further include an exterior part sealing the above-mentioned electrode structure body (including the multilayer type electrode structure body) and the electrolyte. In this case, the non-coated portion of the electrode may be connected with a lead tap protruding outwardly of the exterior part to thereby be electrically connected with the outside of the exterior part.

### (Example 1)

A cathode in which a cathode active material layer was formed on both surfaces of a current collector was manufactured by mixing 92 wt% of LiNi_{0.80}Co_{0.15}Al_{0.05}O₂, 5 wt% of carbon black, and 3 wt% of polyvinylidene fluoride (Mw=600,000) with N-methyl-2-pyrrolidone (NMP), which was a solvent, and coating, drying, and roll-pressing the mixture on an aluminum current collector.

An anode in which an anode active material layer was formed on both surfaces of a current collector was manufactured by mixing 93 wt% of graphite, 5 wt% of conductive carbon having a flake shape, 1 wt% of styrene-butadiene rubber (SBR, Zeon Corp. (Japan), BM-451 B), and 1 wt% of carboxymethyl cellulose (CMC) with water, which was a solvent, and coating, drying, and roll-pressing the mixture on a copper current collector.

In order to manufacture an inorganic layer, a coating solution was prepared under the conditions illustrated in the following Table 1 by mixing alumina (average particle size: 0.75 µm) and polyvinylidene fluoride (Mw=600,000) with N-methyl-2-pyrrolidone (NMP), which was a solvent, and then, an inorganic layer-anode composite was manufactured by applying and drying the coating solution on the manufactured anode.

In this case, the inorganic layer was formed on both surfaces of the anode, and a thickness of the formed inorganic layer was 20 µm.

Thereafter, the cathode and the inorganic layer-anode composite were stacked and pressed (500 kgf), thereby manufacturing a multilayer type electrode structure body.

A secondary battery was manufactured by forming electrode taps at non-coated portions of the cathode and the anode of the manufactured multilayer type electrode structure body using a welding method, inserting the multilayer type electrode structure body provided with the electrode taps into a pouch, injecting an electrolyte, and sealing the pouch. In this case, as the electrolyte, a solution obtained by dissolving 1 M LiPF₆ in a mixed solvent (EC:EMC=1 (V):2(V)) of ethyl carbonate (EC) and ethylmethyl carbonate (EMC) was used.

In order to evaluate characteristics of the battery, after sealing the pouch, the battery was kept in a state in which the multilayer electrode structure body was impregnated in the electrolyte for 12 hours. After keeping the battery for 12 hours, a free-charging process was performed using a current of 0.25C (2.5A) for 36 minutes. After 1 hour of the free-charging process, a degassing process was performed, and formation charge/discharge (charge condition: CC-CV, 0.2C-4.2V, 0.05C CUT-OFF, discharge condition: CC 0.2C, 2.5V CUT-OFF) was performed. After completing the formation charge/discharge, standard charge/discharge (charge condition: CC-CV, 1.0C-4.2V, 0.05C CUT-OFF, discharge condition: CC, 1.0C, 2.5V CUT-OFF) was performed.

In order to evaluate safety, a battery charged with 4.2V was punctured by a pin having a diameter of 3mm at a rate of 80mm/sec, and whether or not ignition was generated was observed.

**(Table 1)**

| **Example** | **Inorganic Material** | **Binder** | **Inorganic Material/Binder** (wt%) | **Solvent** |
|---|---|---|---|---|
| **Example** 1-1 | **Alumina** | PVDF | 95/5 | NMP |
| **Example** 1-2 | **Alumina** | PVDF | 90/10 | NMP |
| **Example** 1-3 | **Alumina** | PVDF | 80/20 | NMP |
| **Example** 1-4 | **Alumina** | PVDF | 70/30 | NMP |
| **Example** 1-5 | **Alumina** | PVDF | 60/40 | NMP |
| **Example** 1-6 | **Alumina** | PVDF | 50/50 | NMP |
| **Example** 1-7 | **Alumina** | PVDF | 40/60 | NMP |

### (Example 2)

A secondary battery was manufactured by the same manner in Example 1 under the conditions illustrated in the following Table 2 except for using water as the solvent instead of N-methyl-2-pyrrolidone (NMP) at the time of preparing the coating solution for forming the inorganic layer.

**(Table 2)**

| **Example** | **Inorganic Material** | **Binder** | **Inorganic Material/Binder** (wt%) | **Solvent** |
|---|---|---|---|---|
| **Example** 2-1 | **Alumina** | PVDF | 95/5 | **Water** |
| **Example** 2-2 | **Alumina** | PVDF | 90/10 | **Water** |
| **Example** 2-3 | **Alumina** | PVDF | 80/20 | **Water** |
| **Example** 2-4 | **Alumina** | PVDF | 70/30 | **Water** |
| **Example** 2-5 | **Alumina** | PVDF | 60/40 | **Water** |
| **Example** 2-6 | **Alumina** | PVDF | 50/50 | **Water** |
| **Example** 2-7 | **Alumina** | PVDF | 40/60 | **Water** |

### (Comparative Example 1)

A secondary battery was manufactured by the same manner in Example 1 except for using a polyethylene microporous film having a thickness of 25 µm as the separator without forming the inorganic layer.

### (Comparative Example 2)

### A secondary battery was manufactured by the same manner in Example 1 under the conditions illustrated in the following Table 3 except for using acrylate (Acr) instead of a fluorine based resin as a binder of the inorganic layer.

**(Table 3)**

| **Comparative Example** | | **Inorganic Material** | **Binder** | **Inorganic Material/Binder** (wt%) | **Solvent** |
|---|---|---|---|---|---|
| **Comparative Example** | 2-1 | **Alumina** | Acr | 95/5 | NMP |
| **Comparative Example** | 2-2 | **Alumina** | Acr | 90/10 | NMP |
| **Comparative Example** | 2-3 | **Alumina** | Acr | 80/20 | NMP |
| **Comparative Example** | 2-4 | **Alumina** | Acr | 70/30 | NMP |
| **Comparative Example** | 2-5 | **Alumina** | Acr | 60/40 | NMP |
| **Comparative Example** | 2-6 | **Alumina** | Acr | 50/50 | NMP |
| **Comparative Example** | 2-7 | **Alumina** | Acr | 40/60 | NMP |

It was confirmed that in the cases of all the secondary batteries manufactured in Examples 1 and 2 and Comparative Example 2, ignition was not generated at the time of puncturing the battery, but it was confirmed that in the case of the secondary battery manufactured in Comparative Example 1 in which a microporous film made of a polymer resin was provided as the separator, ignition was generated by a puncture test. Further, in the case in which a content of the inorganic particles of the inorganic layer was less than 40 wt%, it was confirmed that ignition was generated by the puncture test.

FIG. 1 is a view illustrating a result obtained by measuring lifespans (cycle characteristics) of the secondary batteries manufactured in Examples 1 and 2 and Comparative Examples 1 and 2 based on the content of the inorganic particles of the inorganic layer. In detail, FIG. 1 is a view illustrating a result obtained by measuring a ratio of battery capacity at 1000 cycles to battery capacity at one cycle (battery capacity (1000 cycle)/ battery capacity (1 cycle)×100%) when a charge and discharge cycle (charge and discharge condition: 2C charge, 2C discharge) was performed 1000 times.

As illustrated in FIG. 1, it may be appreciated that in the case of the secondary battery manufactured in Comparative Example 1, when the charge and discharge cycle was performed 1000 times, 80% of capacity was maintained, but it was confirmed that in the cases of the secondary batteries manufactured in Examples 1 and 2, the batteries had similar or more improved lifespans as compared to the secondary battery manufactured in Comparative Example 1. More specifically, it may be appreciated that in the case in which the inorganic layer contained 5 wt% of the inorganic particles, the battery had a lifespan equivalent to that of a lithium secondary battery according to the related art, exemplified by Comparative Example 1, and in the case in which the content of the inorganic particles contained in the inorganic layer was 10 wt% or more, the lifespan was significantly improved.

Further, it was confirmed that in the secondary battery manufactured in Comparative Example 2, the cathode and the inorganic layer were not physically bound to each other even after pressing, and it may be confirmed that as the content of the inorganic particles was increased, the lifespan of the battery was significantly decreased.

In the lithium secondary battery according to the exemplary embodiment of the present invention, the separator is implemented by the inorganic layer containing the inorganic particles and the binder rather than the resin based microporous film, such that the lithium secondary battery may have significantly excellent safety.

Further, in the lithium secondary battery according to the exemplary embodiment of the present invention, the inorganic layer serving as the separator is physically bound to both of the cathode and the anode to thereby form an integrated battery structure body, such that the lifespan of the battery may be significantly improved.

In addition, the lithium secondary battery according to the exemplary embodiment of the present invention does not include the resin based microporous film, and the inorganic layer serving as the separator has a significantly thin thickness of 10 to 40 µm, more specifically, 10 to 25 µm, such that the lithium secondary battery may be manufactured as an ultra-thin battery.

Hereinabove, although the present invention is described by specific matters, exemplary embodiments, and drawings, they are provided only for assisting in the entire understanding of the present invention. Therefore, the present invention is not limited to the exemplary embodiments. Various modifications and changes may be made by those skilled in the art to which the present invention pertains from this description.

Therefore, the spirit of the present invention should not be limited to the above-described embodiments, and the following claims as well as all modified equally or equivalently to the claims are intended to fall within the scope and spirit of the invention.

## Claims

1. A lithium secondary battery comprising:
a cathode in which a cathode active material layer is formed on a cathode current collector;
an anode in which an anode active material layer is formed on an anode current collector; and
an inorganic layer positioned between the cathode and the anode facing each other and containing inorganic particles and a binder,
wherein the inorganic layer is bound to both of the cathode active material layer and the anode active material layer.

2. The lithium secondary battery of claim 1, wherein the inorganic layer is a separator of the secondary battery.

3. The lithium secondary battery of claim 1, wherein the binder of the inorganic layer is a fluorine based resin, and at least one of the cathode active material layer and the anode active material layer contains a binding agent, which is a fluorine based resin.

4. The lithium secondary battery of claim 3, wherein the cathode active material layer contains the binding agent, which is the fluorine based resin,
the inorganic layer and the anode active material layer are bound to each other by applying a coating solution containing the inorganic particles, the binder, and a solvent on the anode active material layer and volatilizing and removing the solvent to solidify the binder, and
the inorganic layer and the cathode active material layer are bound to each other by pressing the anode on which the inorganic layer is formed and the cathode.

5. The lithium secondary battery of claim 3, wherein the anode active material layer contains the binding agent, which is the fluorine based resin,
the inorganic layer and the cathode active material layer are bound to each other by applying a coating solution containing the inorganic particles, the binder, and a solvent on the cathode active material layer and volatilizing and removing the solvent to solidify the binder, and
the inorganic layer and the anode active material layer are bound to each other by pressing the cathode on which the inorganic layer is formed and the anode.

6. The lithium secondary battery of claim 1, wherein the inorganic layer includes a first inorganic layer bound onto the cathode active material layer by volatilizing and removing a solvent dissolving a first binder, which is a fluorine based resin, to solidify the first binder; and a second inorganic layer bound onto the anode active material layer by volatilizing and removing a solvent dissolving a second binder, which is a fluorine based resin, to solidify the second binder,
the first inorganic layer formed on the cathode and the second inorganic layer formed on the anode are bound to each other by pressing.

7. The lithium secondary battery of claim 3, wherein the binding agent and the binder are each independently polyvinylidene fluoride (PVDF), poly(vinylidene fluoride-hexafluoro propylene (PVdf-HFP), or a mixture thereof.

8. The lithium secondary battery of claim 1, wherein the inorganic particles are selected from Al₂O₃, TiO₂, ZrO₂, Y₂O₃, ZnO, CaO, NiO, MgO, SiO₂, SiC, Al(OH)₃, AIO(OH), BaTiO₃, PbTiO₃, PZT, PLZT, PMN-PT, HfO₂, SrTiO₃, SnO₃, CeO₂, or a mixture thereof.

9. The lithium secondary battery of claim 1, wherein the inorganic layer has a thickness of 10 to 40 µm.

10. The lithium secondary battery of claim 1, wherein the inorganic particles have an average diameter of 0.1 to 5 µm.

11. The lithium secondary battery of any one of claims 1 to 10, wherein the inorganic layer contains 90 to 60 wt% of the inorganic particles and 10 to 40 wt% of the binder.
